(19) **Europäisches Patentamt**

**European Patent Office**

**Office européen des brevets**

(11) Veröffentlichungsnummer: **0 366 659 B1**

(12) **EUROPÄISCHE PATENTSCHRIFT**

(45) Veröffentlichungstag der Patentschrift: **29.12.93**

(21) Anmeldenummer: **88903815.4**

(22) Anmeldetag: **27.04.88**

(86) Internationale Anmeldenummer:
**PCT/EP88/00353**

(87) Internationale Veröffentlichungsnummer:
**WO 88/09276 (01.12.88 88/26)**

(51) Int. Cl.⁵: **B60T 8/32**

(54) **ANTIBLOCKIERREGELSYSTEM.**

(30) Priorität: **21.05.87 DE 3717005**

(43) Veröffentlichungstag der Anmeldung:
**09.05.90 Patentblatt 90/19**

(45) Bekanntmachung des Hinweises auf die
Patenterteilung:
**29.12.93 Patentblatt 93/52**

(84) Benannte Vertragsstaaten:
**AT DE FR GB IT**

(56) Entgegenhaltungen:
**DE-A- 2 422 147**
**GB-A- 1 018 548**
**US-A- 3 918 766**
**US-A- 4 585 280**

**Patent Abstracts of Japan, Band 9, Nr. 249
(M-419)(1972), 5. Oktober 1985**

(73) Patentinhaber: **ROBERT BOSCH GMBH
Postfach 30 02 20
D-70442 Stuttgart(DE)**

(72) Erfinder: **VAN ZANTEN, Anton
Waldstrasse 15/2
D-7257 Ditzingen 4(DE)**
Erfinder: **KOST,Friedrich
Johannes-Brahms-Strasse 1
D-7014 Kornwestheim(DE)**
Erfinder: **RUF, Wolf-Dieter
Schlatthülzlesweg 17
D-7076 Waldstetten(DE)**

(74) Vertreter: **Kammer, Arno
Postfach 10 56 08
Grenzhöfer Weg 36
D-69123 Heidelberg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Antiblockierregelsystem mit den Merkmalen des Oberbegriffs des Anspruchs 1.

Stand der Technik

Ein Antiblockierregelsystem mit diesen Merkmalen ist aus der DE-PS 20 63 944 bekannt. Dort werden neben Schlupfsignalen Verzögerungs- und Beschleunigungssignale (-b-, +b-Signale) erzeugt und in Und- und Oder-Gatter zu Bremsdrucksteuersignalen verknüpft.

Aufgabe und Lösung

Der Erfindung liegt die Aufgabe zugrunde, derartige Systeme weiter zu verbessern und insbesondere bei großer Entfernung des Drucks vom Blockierdruck hohe Druckaufbaufrequenzen und bei kleiner Entfernung kleine Druckaufbaufrequenzen zu erzielen.

Diese Aufgabe wird durch die im Anspruch 1 angegebenen Merkmale gelöst.

Weiterbildungen und Verbesserung dieser Lösung ergeben sich aus den Unteransprüchen und der folgenden Beschreibung.

Das Ziel dieser Erfindung ist es, den Radbremszylinderdruck eines Fahrzeugs so einzustellen, daß einerseits ein möglichst hoher Kraftschlußbeiwert $\mu$ in Reifenlängsrichtung und andererseits ein hoher Kraftschlußbeiwort in Reifenquerrichtung zur Verfügung stehen.

Dies ist der Fall, wenn sich Bremsschupfwerte einstellen, die nahe dem Maximum der $\mu$-Schlupfkurve liegen, das Maximum jedoch noch nicht überschritten ist.

In diesem Bereich besitzt die Steigung der $\mu$-Schlupfkurve kleine positive Werte, das dynamische Verhalten des Schlupfs ist asymptomisch stabil. Ein Verfahren, das die Steigung der Schlupfkurve bestimmt und den Schlupf so einstellt, daß die Steigung der Schlupfkurve kleine positive Werte annimmt, ist aus der DE-OS 36 18 691 bekannt.

Bei der Erfindung wird primär die Radumfangsgeschwindigkeit $V_R$ der geregelten Räder als Meßgröße benutzt. In einer später zu beschreibenden Ausführung wird auch die Fahrzeugverzögerung, falls eine gestützte Fahrzeugreferenzgeschwindigkeit benutzt werden soll, gemessen.

Eingestellt wird der Bremsdruck mit Hilfe von Hydraulikventilen, deren Ansteuerlogik z.B. die Betriebszustände Daueraufbau, gepulster Aufbau mit vorgegebener Pulslänge, Druckhalten, Dauerabbau annehmen kann.

Die Abtastung der Radgeschwindigkeit und ihre Auswertung zu digitalen Signalen erfolgt mit einer Intervall-Länge von z.B. 3 ms. Die Regelung läuft in Grenzzyklen ab, die aus einem ereignisabhängigen gepulsten Druckaufbau, aus Druckabbau und einer ins stabile Gebiet der Schlupfkurve führenden Haltephase bestehen.

Innerhalb der auf einen Aufbauimpuls folgenden Druckhaltephase wird folgendes Stabilitätskriterium für jedes geregelte Rad individuell überwacht:

$$P_y = \begin{cases} 0 & \text{für } \Delta\lambda < \Delta\lambda_1, \\ 0 & \text{für } \dot{V} > b_1, \\ \alpha(b_1 - \dot{V})(\Delta\lambda - \Delta\lambda_1) + \beta(\Delta\lambda - \Delta\lambda_1) \text{ sonst.} \end{cases} \quad (1)$$

Hierin sind

$\alpha, \beta, b_1, \Delta\lambda_1$      Konstanten

$\Delta\lambda = \lambda - \lambda_s,$

$\lambda = 1 - V_R/V_{Ref}$      der aktuelle Schlupf

$\lambda_s$      Schlupf zu Beginn der Haltephase

$\dot{V} = \dot{V}_R - b_x$

$V_R$             Radumfangsbeschleunigung

$b_x$             Fahrzeugbeschleunigung

Die verwendeten Größen $V_{Ref}$ und $b_x$ werden in später noch zu beschreibender Weise ermittelt.

Für Werte $P_y = 0$ verhält sich das Rad mit Sicherheit stabil, weshalb ein Aufbaupuls erfolgen kann.

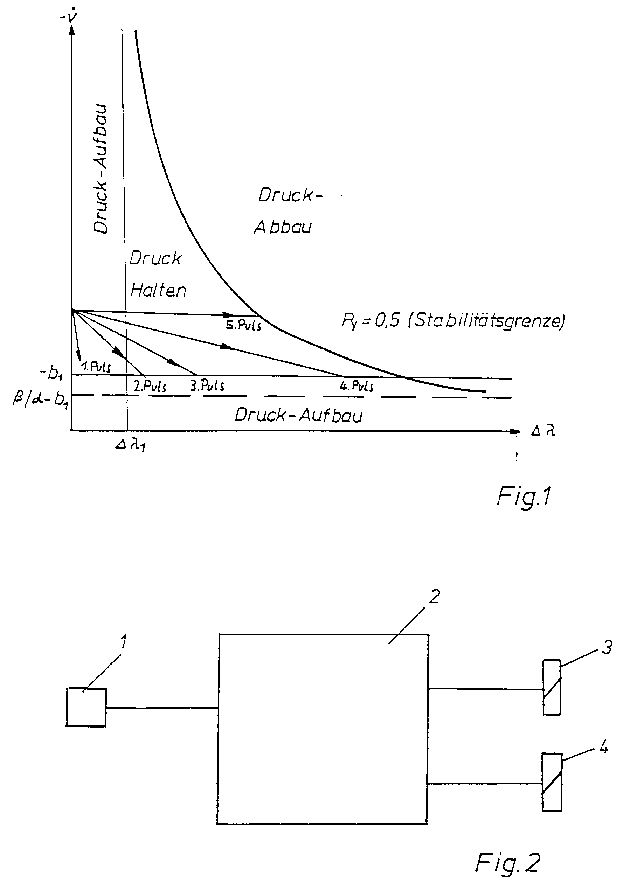

Aus Werten $0 < P_y <$ z.B. 0,5 kann geschlossen werden, daß sich das Rad in einem dynamischen Übergang befindet, der Druck wird deshalb gehalten. Ist $P_y > 0,5$ so ist die Instabilität oder Grenzstabilität zu vermuten; der Radbremsdruck wird deshalb abgebaut. Im Falle ungestörten Radverhaltens läßt sich das obige Stabilitätskriterium in einer durch (-V) und $\Delta\lambda$ aufgespannten Phasenebene veranschaulichen (Fig. 1).

Die Radgeschwindigkeit $V_R$ und der Schlupf $\lambda$ gehorchen der Beziehung

$$\frac{\theta}{R_d} \dot{V}_R = -M_{Bneu} + M_A (\lambda), \tag{2}$$

wobei

$\theta$             das Radträgheitsmoment

$R_d$             der dynamische Radradius

$M_{Bneu}$          das Bremsmoment in der betrachteten Haltephase

$M_A$           das schlupfabhängige Antriebsmoment ist.

Zu Ende der vorangegangenen Haltephase befand sich das Rad nahe am (stabilen) stationären Zustand $\lambda_s$ mit $\lambda_s = 0$.

Zu diesem Zeitpunkt galt:

$$\frac{\theta}{R_d} \dot{V}_{RS} = - M_{Balt} + M_s (\lambda)$$

darin ist

$V_{RS} = (1-\lambda_s) \cdot b_x = $ const.

Da $\lambda_s \ll 1$ ist, kann man vereinfachen:

$$\frac{\theta}{R_d} b_x = -M_{balt} + M_s(\lambda) \tag{3}$$

Glg. (3) von Glg. (2) subtrahiert und um $\lambda_s$ linearisiert, ergibt:

$$\frac{\theta}{R_d} (\dot{V}_R - b_x) = -(M_{Bneu} - M_{Balt}) + \frac{dM_1}{d\lambda}\bigg|_{\lambda=\lambda_s} (\lambda - \lambda_s).$$

Definitionsgemäß ist $\dot{V}_R - b_x = \dot{V}$ und $\lambda - \lambda_s = \Delta\lambda$. Der Term $M_{Bneu} - M_{Balt}$ entspricht dem Momentensprung $\Delta M_B$ zu Beginn der betrachteten Haltephase, woraus sich ergibt:

$$\frac{\theta}{R_d} \dot{V} = -\Delta M_B + \frac{\alpha M_A}{\alpha\lambda}\bigg|_{\lambda=\lambda_s} \cdot \Delta\lambda \tag{4}$$

Unter Elimination der Zeit ergibt sich für Gleichung (4) in der Phasenebene das in Fig. 1 gezeigte Verhalten (qualitativ). Um den Verzögerungen und Totzeiten in der Messung Rechnung zu tragen sowie den Einfluß der Ventilschaltzeiten zu berücksichtigen, muß eine kurve Mindesthaltezeit nach jedem Aufbau puls eingehalten werden, bevor die Stabilitätsuntersuchung zum Tragen kommt.

Anhand der Zeichnung wird ein Ausführungsbeispiel der Erfindung erläutert.

Es zeigen

Fig. 1      die qualitative Darstellung des Stabilitätskriteriums in einer durch $-\dot{V}$ und $\Delta\lambda$ aufgespannten Phasenebene

Fig. 2      ein Blockschaltbild eines Antiblockierreglers

Fig. 3-5      Flußdiagramme für verschiedenartige Druckbeeinflussungen.

In Fig. 2 ist $-\dot{V}$ über $\Delta\lambda$ für aufeinanderfolgende Druckaufbauimpulse aufgetragen. Die aufgespannte Ebene ist in Aufbaubereiche ($0 < -\dot{V} < -b_1$ und $0 < \Delta\lambda < \Delta\lambda_1$), einen Abbaubereich (jenseits von $P_y$ = z.B. 0,5) und einem dazwischenliegenden Haltebereich unterteilt. Man erkennt, daß der erste Puls nicht aus dem mit Sicherheit stabilen Bereich ($P_Y = 0$) herausgeführt, auf die Pulse 2., 3. und 4. aber zunehmend lange Haltephasen folgen ($O < P_Y < O,S$). Der 5. Puls führt dann in die Instabilität, d. h. zum Druckabbau. ($P_Y \geqq$ 0,5).

In Fig. 2 ist ein Blockschaltbild eines einkanaligen (Regelung nur für ein Rad dargestellt) Antiblockierreglers gezeigt. Ein Meßwertgeber zur Bestimmung der Radgeschwindigkeit ist mit 1, eine Auswerteschaltung in Form eines Rechners mit 2, ein Einlaßventil mit 3 und ein Auslaßventil mit 4 bezeichnet.

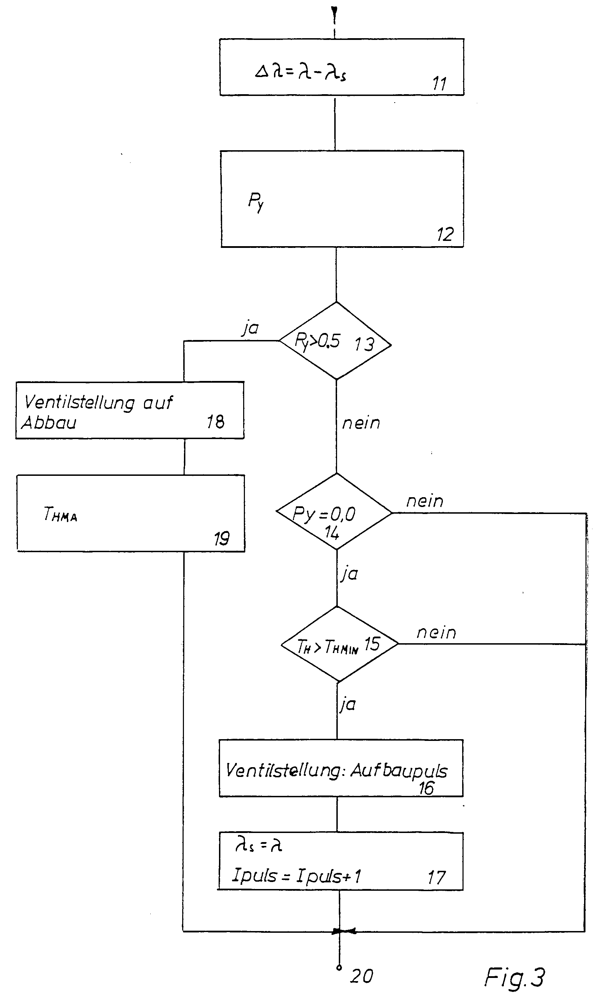

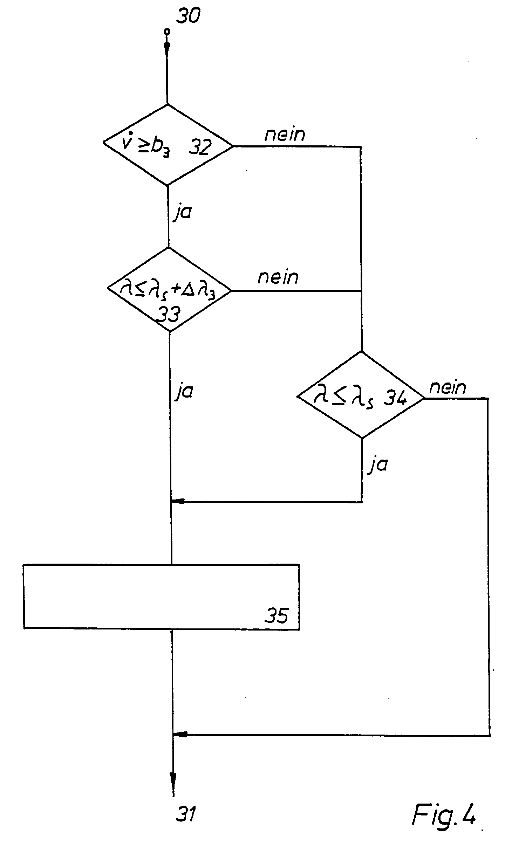

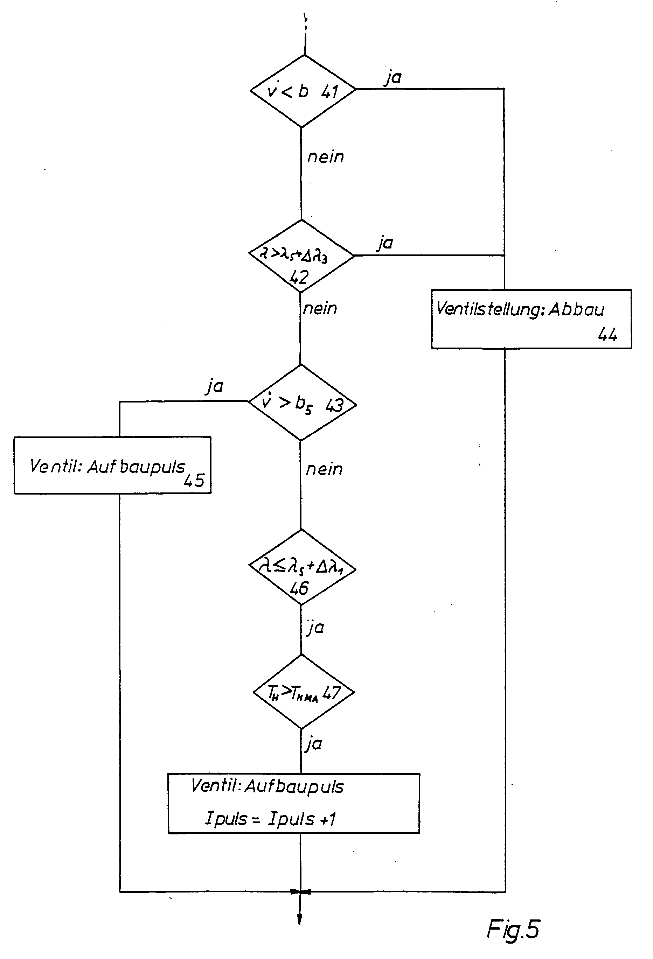

Der Regelalgorithmus durchläuft nacheinander die Zustände "Stabilitätsprüfung" (Fig. 3), "Druckabbau" (Fig. 4), "Wiederhochlaufen des Rads" (Fig. 5)

Der Rechner 2 erkennt im Zustand der "Stabilitätsprüfung" erfindungsgemäß Instabilitäten des Rads in den Haltephasen zwischen zwei Druckaufbauimpulsen nach einem vorhergehenden Druckabbau gemäß dem Programmverlauf der Fig. 3. Nach Bildung der Differenz $\Delta\lambda$ aus dem aktuellen und dem zuletzt als stabil erkannten Schlupfwert (in 11) wird $P_y$ gemäß Gleichung (1) gebildet. Ist $P_y$ größer als die Vergleichsgröße a (0,5) (Vergleich in 13), so werden die Ventile auf Druckabbau gesteuert (18). In 19 wird festgelegt, wie lange die auf diesen Druckabbau folgende Druckhaltephase dauern soll, die im Zustand "Wiederhochlaufen des Rads" realisiert wird. Im folgenden Abtastzyklus befindet sich der Algorithmus im Zustand "Druckabbau".

Ist $P_y < 0,5$, so wird in 14 geprüft, ob $P_y = 0$ ist, und wenn dies der Fall ist, in 15 geprüft, ob die laufende Haltephase eine minimale Zeit $T_{HMIN}$ andauert. Ist auch dies der Fall, so erfolgt über 16 eine Ansteuerung der Ventile mit einem Impuls in Druckaufbaustellung. In 17 wird der (als stabil erkannte) aktuelle Schlupfwert $\Delta_S$ abgespeichert; außerdem wird die Zahl der Aufbaupulse innerhalb eines Regelzyklus $I_{puls}$ um 1 hochgezählt. Der Algorithmus bleibt weiterhin im Zustand "Stabilitätsprüfung".

War dagegen $P_y$ nicht 0 oder ist $T_H$ nicht größer $T_{HMIN}$, so wird in beiden Fällen ein Druckhaltesignal am Ausgang 20 gegeben. Der Algorithmus bleibt weiterhin im Zustand "Stabilitätsprüfung".

Die Zeit $T_{HMA}$ kann eine Funktion der Pulse in der laufenden gepulsten Aufbauphase sein (z.B. $T_{HMA} = T_1 - I \cdot \Delta T_1$, wobei $T_1$ und $\Delta T_1$ Konstante und I die Impulszahl ist).

In Fig. 4 ist ein Flußdiagramm zur Beeinflussung des Druckabbaus gezeigt. Dieser logische Pfad wird durchlaufen, wenn im vorhergegangenen Abtastintervall im Zustand der "Instabilitätsprüfung" Instabilität erkannt wurde. Es erzeugt ein Druckabbau-Signal am Ausgang 31, solange V den Wert $b_3 \approx 0$ nicht überschreitet oder $\lambda \leqq \lambda_s + \Delta\lambda_3$ nicht erfüllt ist (33), d.h., wenn der momentane Schlupf $\lambda$ um mehr als um $\Delta\lambda_3$ über dem zuletzt als stabil erkannten Schlupfwert $\lambda_s$ liegt. Außerdem darf $\lambda_s$ nicht unterschritten sein (34). Sind dagegen die Bedingungen 32-34 positiv erfüllt, so wird auf Druckhalten gesteuert (35). Bei Beendigung des Druck-abbaus wird in 35 ein Signal S gesetzt; der Algorithmus befindet sich dann im folgenden Abtastschritt im Zustand "Wiederhochlaufen des Rads". Wird im weiteren Verlauf erstmalig wieder ein negatives V gemessen, so wird die Referenzbeschleunigung $b_x$ und die Referenzgeschwindigkeit $V_{Ref}$ aktualisiert.

Anhand Fig. 5 wird die Erzeugung der ersten Haltephase nach Druckabbau beschrieben. Diese Haltephase hat die Aufgabe, den Schlupf auf den letzten noch sicher als stabil erkannten Schlupfwert zu reduzieren und darüber hinaus die Referenzgeschwindigkeit am "Abseilen", d.h. an unzulässigem Absinken zu hindern. Sehr hohe Schlupfwerte nach einem $\mu$-Sprung (42) sowie weitere Differenzverzögerung $V < b_1$ - (41) durch zwischenzeitlich auftretende $\mu$-Änderungen werden mit weiterem Druckabbau beantwortet (44). Zu hohe positive Radbeschleunigungen (43) die infolge von Ventiltotzeiten entstehen können, werden durch eingeschobene Aufbauimpulse reduziert (45).

Treten diese beschriebenen Fälle nicht auf, so wird gewartet, bis $\lambda_s$ nahezu wieder erreicht ist (46). Zusätzlich wird eine zur Korrektur einer "abseilenden" Referenzgeschwindigkeit erforderliche Wartezeit $T_{HMA}$ eingehalten (47), die wie schon erwähnt, von der Zahl der Aufbaupulse abhängen kann.

EP 0 366 659 B1

Wurde in 35 das Signal S eines Rades gesetzt und tritt danach erstmals ein Wert V < 0 für das betrachtete Rad auf, so können die Größen $b_x$ und $V_{Ref}$ korrigiert werden. Diese werden wie folgt berechnet:

$$b_{xneu} = (1-S_{Bref})_* b_{xalt} + S_{Bref*}(V_{anp(k)}-V_{anp(k-1)})/tanp, \qquad (5)$$

$$V_{Refneu} = (1-S_{Vref})_* V_{refalt} + S_{Vref*}V_{anpk} ; \qquad (6)$$

darin sind

| | |
|---|---|
| $b_{xneu/alt}$ | die korrigierte bzw. bisherige Fahrzeugbeschleunigung |
| $V_{Refneu/alt}$ | die korrigierte bzw. bisherige Fahrzeuggeschwindigkeit |
| $V_{anp(k)/(k-1)}$ | die Geschwindigkeit zum aktuellen bzw. vergangenen Anpassungszeitpunkt |
| $t_{anp}$ | die vergangene Zeit seit dem letzten Anpassungszeitpunkt |
| $S_{Bref}, S_{Vref}$ | Konstanten |

Die Werte $b_{xneu/alt}$ und $V_{Refneu/alt}$ gelten für alle geregelten Räder gemeinsam, die Größen $V_{anp(k)/(k-1)}$, $t_{an(p)}$ sind für jedes Rad individuell zu ermitteln.

Die aus (5) ermittelte Fahrzeugverzögerung $b_x$ wird anschließend auf den Wertebereich von z.B.

$$[-9m/s^2, 0\ m/s^2]$$

begrenzt.

Die Gleichung (5) kann entfallen, wenn man $b_x$ direkt mißt. Überschreitet eine Radgeschwindigkeit die Referenzgeschwindigkeit, so wird die Referenzgeschwindigkeit auf diese Radgeschwindigkeit angehoben. Zur Fortsetzung von $V_{Ref}$ zwischen den Anpassungszeitpunkten wird mit der Gleichung

$$V_{Refneu} = V_{Refalt} + b_x \Delta t \qquad (7)$$

extrapoliert. $\Delta t$ ist eine Abtastintervall-Länge.

Bezeichnungen

| | |
|---|---|
| $\theta$ | Radträgheitsmoment |
| $R_d$ | dynamischer Radradius |
| $V_R$ | Radumfangsgeschwindigkeit |
| $\lambda$ | Radbremsschlupf ($\lambda = 1-V_R/V_{Ref}$) |
| $b_x$ | Fahrzeug-Referenzbeschleunigung |
| $\Delta\lambda$ | Schlupfänderung innerhalb einer Haltephase |
| $\dot{V}$ | Differenzbeschleunigung ($\dot V = V_R-b_x$) |
| $\lambda_s$ | stabiler Schlupf am Ende einer Haltephase |
| $\Delta\lambda_i$ | Schlupfänderungsschwellen |
| $b_1$ | Differenzbeschleunigungsschuellen |
| $M_B$ | Bremsmoment |
| $M_A$ | Antriebsmoment von Straße auf Rad |
| $\Delta M_B$ | Bremsmomentensprung |
| $V_{Ref}$ | Fahrzeug- Referenzgeschwindigkeit |
| $\mu$ | Kraftschlußbeiwert in Längsrichtung |
| $P_y$ | nichtlineare Funktion aus $\Delta\lambda$ und B |
| $\alpha, \beta$ | Konstanten |
| LANP | logische Variable für Referenzbildung |
| $T_H$ | Druckhaltezeit |
| $T_{HMA}$ | Wartezeit |
| $T_{HMIN}$ | Mindestwartezeit |
| $S_{Bref}, S_{Vref}$ | Konstanten |
| $t_{anp}$ | Zeit zwischen zwei Anpassungszeitpunkten |
| $V_{anp}$ | Radgeschwindigkeit zum Anpassungszeitpunkt |
| $I_{Puls}$ | Zahl der Aufbaupulse im Regelzyklus |
| $\Delta t$ | Abtastintervall-Länge |

EP 0 366 659 B1

**Patentansprüche**

1. Antiblockierregelsystem mit einem Meßwertgeber zur Ermittlung der Radgeschwindigkeit $V_R$, einer Auswerteschaltung, der das der Raddrehgeschwindigkeit $V_R$ entsprechende Signal zugeführt wird und die daraus ein der Radbeschleunigung entsprechendes Signal $\dot{V}_R$ und mit Hilfe eines der Fahrzeuggeschwindigheit in ihrem Verlauf angenäherten Referenzgeschwindigkeitssignals $V_{Ref}$ ein Schlupfsignal $\lambda$ erzeugt und unter Verwendung dieser Signale Bremsdrucksteuersignale erzeugt, die einer Bremsdrucksteuereinheit zur Variation des Bremsdrucks zugeführt wird, wobei die Bremsdrucksteuereinheit in Abhängigkeit von diesen Signalen den Bremsdruck absenkt, konstant hält und ansteigen läßt, wobei im Anschluß an eine Druckabsenkung eine Druckhaltephase und darauf in der Regel ein gepulster Druckaufbau folgt, dadurch gekennzeichnet, daß in den auf Druckaufbauimpulse folgenden Druckhaltephasen ermittelt wird, ob $\Delta\lambda < \Delta\lambda_1$ und $\dot{V} > b_1$ ist und ob außerdem der Ausdruck $P_y = \alpha\,(b_1\text{-}\dot{V})(\Delta\lambda\text{-}\Delta\lambda_1) + \beta\,(\Delta\lambda\text{-}\Delta\lambda_1)$ zwischen 0 und einem vorgegebenen Wert a liegt, wobei $\alpha$, $\beta$, $b_1$ und $\Delta\lambda_1$ positive Konstante sind und $\Delta\lambda = \lambda\text{-}\lambda_s$, $\dot{V} = \dot{V}_R\text{-}b_x$, $\lambda_s$ das Schlupfsignal zu Beginn der Haltephase und $b_x$ ein Fahrzeugbeschleunigungssignal ist, und daß bei Auftreten der Fälle $\Delta\lambda < \Delta\lambda_1$ und/oder $\dot{V} > b_1$ sofort ein weiterer Druckaufbauimpuls erzeugt wird, dagegen bei $P_y$ zwischen 0 und a der Druck weiter konstantgehalten und bei $P_y > a$ der Druck abgebaut wird.

2. Antiblockierregelsystem nach Anspruch 1, dadurch gekennzeichnet, daß die Haltezeit wenigstens gleich einer vorgegebenen Mindesthaltezeit ($T_{HMIN}$) ist.

3. Antiblockierregelsystem nach Anspruch 1 oder 2, dadurch gekennzeichnet, daß der durch $P_y = a$ eingeleitete Druckabbau beendet wird, und Druck konstantgehalten wird, wenn $\dot{V}$ einen positiven Beschleunigungswert $b_3$ überschreitet und das ermittelte Schlupfsignal $\lambda$ nicht mehr als um einen kleinen Wert $\Delta\lambda_3$ über einem Schlupfwert $\lambda_3$ liegt.

4. Antiblockierregelsystem nach einem der Ansprüche 1 bis 3, dadurch gekennzeichnet, daß der Druckabbau beendet und der Druck konstant gehalten wird, wenn der ermittelte Schlupf $\lambda$ kleiner als der Schlupfwert $\lambda_s$ wird.

5. Antiblockierregelsystem nach einem der Ansprüche 1 bis 4, dadurch gekennzeichnet, daß in der ersten Haltephase nach einem Druckabbau der folgende Druckaufbauimpuls ausgelöst wird, wenn sich der ermittelte Schlupf an den Schlupfwert $\lambda_s$ weitgehend (bis auf den kleinen Wert $\Delta\lambda_1$) angenähert hat.

6. Antiblockierregelsystem nach Anspruch 5, dadurch gekennzeichnet, daß der Druckaufbauimpuls erst nach einer Mindesthaltezeit $T_{HMIN}$ erfolgt.

7. Antiblockierregelsystem nach Anspruch 5 oder 6, dadurch gekennzeichnet, daß bei Auftreten der Fälle $\dot{V} < b_1$ und/oder $\lambda > \lambda_s + \Delta\lambda_3$ in der Haltephase auf Druckabbau umgeschaltet wird.

8. Antiblockierregelsystem nach einem der Ansprüche 5 bis 7, dadurch gekennzeichnet, daß bei Auftreten einer sehr hohen Beschleunigung ($\dot{V} > b_5$) in der Haltephase ein Druckaufbauimpuls erzeugt wird.

9. Antiblockierregelsystem nach einem der Ansprüche 3 bis 8, dadurch gekennzeichnet, daß bei einem ersten Auftreten einer Radverzögerung ($\dot{V} < 0$) nach erfolgtem Druckabbau die Fahrzeugverzögerung $b_{xneu}$ und die Referenzgeschwindigkeit $V_{Refneu}$ aus den alten Werten $b_{xalt}$ und den Radgeschwindigkeiten am letzten Anpaßzeitpunkt und im Augenblick neu errechnet wird.

10. Antiblockierregelsystem nach einem der Ansprüche 1 bis 8, dadurch gekennzeichnet, daß bei Messung der Fahrzeugverzögerung $b_x$ die Referenzgeschwindigkeit mit Hilfe der Fahrzeugverzögerung $b_x$ laufend korrigiert wird.

**Claims**

1. Antilock control system having a sensor for determining the wheel speed $V_R$, an evaluation circuit which is fed the signal corresponding to the wheel speed $V_R$ and which therefrom generates a signal $\dot{V}_R$ - (sic) corresponding to the wheel acceleration and which, with the aid of a reference speed signal $V_{Ref}$ having a characteristic which approximates the vehicle speed, generates a slip signal $\lambda$ and generates

6

by using these signals brake pressure control signals which are fed to a brake pressure control unit for varying the brake pressure, it being the case that depending on these signals the brake pressure control unit drops the brake pressure, keeps it constant and causes it to rise, a pressure drop being followed by a pressure maintenance phase and thereafter, as a rule, by a pulsed pressure build-up, characterized in that it is determined in the pressure maintenance phases following the pressure build-up pulses whether $\Delta\lambda < \Delta\lambda_1$ and $\dot{V} > b_1$ and whether, moreover, the expression [isc] $P_y = \alpha(b_1-\dot{V})(\Delta\lambda-\Delta\lambda_1) + \beta(\Delta\lambda-\Delta\lambda_1)$ is between 0 and a prescribed value a, $\alpha$, $\beta$, $b_1$ and $\Delta\lambda_1$ being positive constants and $\Delta\lambda = \lambda-\lambda_s$, $\dot{V} = \dot{V}_R-b_x$, $\lambda_s$ being the slip signal at the start of the maintenance phase, and $b_x$ being a vehicle acceleration signal, and in that given the occurrence of the cases of $\Delta\lambda < \Delta\lambda_1$ and/or $\dot{V} > b_1$ a further pressure build-up pulse is generated at once, whereas given $P_y$ between 0 and a the pressure continues to be kept constant and given $P_y > a$ the pressure is reduced.

2. Antilock control system according to Claim 1, characterized in that the maintenance time is at least equal to a prescribed minimum maintenance time ($T_{HMIN}$).

3. Antilock control system according to Claim 1 or 2, characterized in that the pressure reduction initiated by $P_y = a$ is terminated, and pressure is kept constant when $\dot{V}$ exceeds a positive acceleration value $b_3$ and the slip signal $\lambda$ determined is greater than a slip value $\lambda_3$ by no more than a small value $\Delta\lambda_3$.

4. Antilock control system according to one of Claims 1 to 3, characterized in that the pressure reduction is terminated and the pressure is kept constant when the slip $\lambda$ determined becomes smaller than the slip value $\lambda_s$.

5. Antilock control system according to one of Claims 1 to 4, characterized in that after a pressure reduction in the first maintenance phase the following pressure build-up pulse is triggered when the slip determined largely (up to the small value $\Delta\lambda_1$) approximates the slip value $\lambda_s$.

6. Antilock control system according to Claim 5, characterized in that the pressure build-up pulse is not produced until after a minimum maintenance time of $T_{HMIN}$.

7. Antilock control system according to Claim 5 or 6, characterized in that given the occurrence of the cases $\dot{V} < b_1$ and/or $\lambda > \lambda_s + \Delta\lambda_3$ in the maintenance phase a switchover is made to pressure reduction.

8. Antilock control system according to one of Claims 5 to 7, characterized in that given the occurrence of a very high acceleration ($\dot{V} > b_5$) in the maintenance phase a pressure build-up pulse is generated.

9. Antilock control system according to one of Claims 3 to 8, characterized in that given a first occurrence of a wheel deceleration ($\dot{V} < 0$) after pressure reduction has been performed the vehicle deceleration $b_{xnew}$ and the reference speed $V_{Refnew}$ are calculated from the old values $b_{xold}$, and the wheel speeds at the last matching instant and at present are recalculated.

10. Antilock control system according to one of Claims 1 to 8, characterized in that when measuring the vehicle deceleration $b_x$ the reference speed is continuously corrected with the aid of the vehicle deceleration $b_x$.

**Revendications**

1. Système antiblocage comportant un capteur de valeur de mesure pour déterminer la vitesse de roue $V_R$, un circuit d'exploitation qui reçoit un signal correspondant à la vitesse de rotation de roue $V_R$ et qui en déduit un signal $\dot{V}_R$ correspondant à l'accélération de roue et à l'aide d'un signal de vitesse de référence $R_{Ref}$ dont le tracé approche la vitesse du véhicule, on génère un signal de glissement $\lambda$ et en utilisant ces signaux, on génère des signaux de commande de pression de frein qui sont appliqués à une unité de commande de pression de frein pour modifier la pression de frein, l'unité de commande de pression de frein diminuant la pression de frein en fonction de ces signaux, maintient cette pression constante ou l'a fait augmenter et une diminution de pression est suivie par une phase de maintien de pression puis, en général, par une montée de pression, impulsionnelle, système caractérisé en ce que, dans les phases de maintien de pression qui suivent les impulsions de montée en pression, on

détermine si $\Delta\lambda < \Delta\lambda_1$ et $\dot{V} > b_1$ et, si en outre, l'expression :

$$P_y = \alpha (b_1 - \dot{V})(\Delta\lambda-\Delta\lambda_1) + \beta (\Delta\lambda-\Delta\lambda_1)$$

est comprise entre 0 et une valeur a prédéterminée, $\alpha$, $\beta$, $b_1$ et $\Delta\lambda_1$ étant des constantes positives et $\Delta\lambda = \lambda-\lambda_S$, $\dot{V} = V_R-b_x$, $\lambda_S$ représente le signal de glissement au début de la phase de maintien et $b_x$ est un signal d'accélération du véhicule, et en ce que dans le cas $\Delta\lambda < \Delta\lambda_1$ et/ou $\dot{V} > b_1$, on génère immédiatement une autre impulsion de montée en pression alors que, par contre, pour $P_y$ compris entre 0 et a, on continue à maintenir la pression constante et pour $P_y > a$, on diminue de nouveau la pression.

2.  Système antiblocage selon la revendication 1, caractérisé en ce que le temps de maintien est au moins égal à un temps de maintien minimum prédéterminé ($T_{HMIN}$).

3.  Système antiblocage selon la revendication 1 ou 2, caractérisé en ce qu'on termine la diminution de pression induite par $P_y = a$ et on maintient la pression constante si $\dot{V}$ dépasse une valeur positive d'accélération $b_3$ et que le signal de glissement, déterminé, $\lambda$ ne dépasse pas une valeur de glissement $\lambda_3$ de plus d'une faible valeur $\Delta\lambda_3$.

4.  Système antiblocage selon l'une des revendications 1 à 3, caractérisé en ce qu'on termine la diminution de pression et on maintient la pression constante si le glissement détermine $\lambda$ est inférieur à la valeur de glissement $\lambda_S$.

5.  Système antiblocage selon l'une des revendications 1 à 4, caractérisé en ce que, dans la première phase de maintien, après une diminution de pression, on déclenche l'impulsion suivante de montée en pression si le glissement déterminé approche très largement la valeur de glissement $\lambda_S$ (jusqu'à une faible valeur $\Delta\lambda_1$).

6.  Système antiblocage selon la revendication 5, caractérisé en ce que l'impulsion de montée en pression n'arrive qu après un temps de maintien minimum $T_{HMIN}$.

7.  Système antiblocage selon la revendication 5 ou 6, caractérisé en ce que, à l'arrivée des cas $\dot{V} < b_1$ et/ou $\lambda > \lambda_S + \Delta\lambda_3$ dans la phase de maintien, on commute sur la diminution de pression.

8.  Système antiblocage selon l'une des revendications 5 à 7, caractérisé en ce que, à l'arrivée d'une accélération très élevée ($\dot{V} > b_5$), on génère une impulsion de montée de pressiori dans la phase de maintien.

9.  Système antiblocage selon l'une des revendications 3 à 8, caractérisé en ce que, à la première arrivée d'une décélération de roue ($\dot{V} < 0$) après une diminution de pression, on calcule la décélération du véhicule $b_{xnouv}$ et la vitesse de référence $V_{Refnouv}$ à partir des anciennes valeurs $b_{xancien}$ et des vitesses de roue au dernier point d'adaptation et à l'instant nouveau.

10. Système antiblocage selon l'une des revendications 1 à 8, caractérisé en ce qu'à la mesure de la décélération du véhicule $b_x$, on corrige en continu la vitesse de référence à l'aide de la décélération du véhicule $b_x$.

Fig.1

Fig.2

Fig.3

Fig.4

Fig.5